# FASCICULE DE BREVET EUROPEEN

(11) **EP 2 555 340 B1**
(45) Date de publication et mention de la délivrance du brevet: **02.09.2015**
(21) Numéro de dépôt: 12305801.8
(22) Date de dépôt: 03.07.2012
(51) Int. Cl.: H01R 13/641, H01R 31/06, H01R 13/639, B60L 11/18, H01R 13/621

(54) **Fiche de raccordement électrique modulable, élément électrique pour une telle fiche, set d'éléments électriques et véhicule électrique comportant une telle fiche**
Modulierbarer elektrischer Anschlussstecker, elektrisches Element für diesen Stecker, Set aus elektrischen Elementen und Elektrofahrzeug, das mit einem solchen Stecker ausgestattet ist
Modular electrical connection plug, electrical element for such a plug, set of electrical elements and electric vehicle comprising such a plug

(30) Priorité: 03.08.2011 FR 1102435
(43) Date de publication de la demande: 06.02.2013
(73) Titulaire: Renault S.A.S., 92100 Boulogne-Billancourt (FR)
(72) Inventeur: Isaac, Sylvain, 78910 ORGERUS (FR)

(56) Documents cités:
- EP-A2- 0 626 737
- WO-A1-2005/124943
- GB-A- 2 312 795
- GB-A- 2 332 103
- GB-A- 2 469 855
- US-A- 4 579 410
- US-A- 5 626 479
- US-A1- 2006 039 102
- US-B1- 7 300 297

## Description

### DOMAINE TECHNIQUE AUQUEL SE RAPPORTE L'INVENTION

La présente invention concerne de manière générale le domaine des fiches de raccordement électrique.

Elle concerne plus particulièrement une fiche de raccordement électrique modulable, destinée à être reliée à un dispositif électrique, comportant :
- un premier élément comprenant des premiers contacts électriques,
- un deuxième élément comprenant, de manière distincte, d'une part, des contacts électriques intermédiaires adaptés à être raccordés auxdits premiers contacts électriques, et, d'autre part, des contacts électriques de sortie destinés à être raccordés à des bornes électriques d'une prise de courant,
- des moyens d'assemblage du premier et du deuxième élément l'un avec l'autre.

Elle trouve une application particulièrement avantageuse pour la réalisation d'une fiche électrique intégrée à un véhicule électrique ou hybride pour relier son chargeur de batterie à une prise de courant.

L'invention concerne également un élément électrique comprenant, de manière distincte, d'une part, des contacts électriques intermédiaires adaptés à être raccordés à des premiers contacts électriques d'une fiche électrique d'un dispositif électrique, et, d'autre part, des contacts électriques de sortie destinés à être raccordés à des bornes électriques d'une prise de courant, et des moyens d'assemblage de cet élément électrique avec ladite fiche.

Elle concerne en outre un set de ces éléments électriques et un véhicule automobile équipé d'une fiche électrique telle que décrite précédemment.

### ARRIERE-PLAN TECHNOLOGIQUE

Dans un certain type de véhicule électrique ou hybride, le cordon d'alimentation de la batterie électrique de traction du véhicule est intégré à celui-ci.

De manière classique, l'extrémité libre de ce cordon est équipée d'une fiche de raccordement électrique comportant des contacts électriques adaptés à être connectés à une prise de courant pour alimenter le chargeur de la batterie.

Un inconvénient de ce système est qu'il existe de nombreux standards de prise de courant que l'utilisateur peut être amené à devoir utiliser lorsqu'il voyage. Ainsi, les possibilités de rechargement de la batterie du véhicule sont fortement réduites notamment lorsque le conducteur se rend dans différents pays.

Les différents standards existants correspondent, d'une part, aux normes différentes en vigueur dans différents pays, par exemple, en France, en Grande-Bretagne, en Suisse ou en Italie, et d'autre part, aux normes différentes en vigueur pour les prises de courant du domaine privé, par exemple au domicile de l'utilisateur, et les prises de courant du domaine public, accessibles par exemple dans des stations de chargement publiques.

Habituellement, chaque standard de prise de courant ne peut coopérer qu'avec un seul type de fiche électrique. La fiche électrique prévue sur le véhicule est donc de fait incompatible avec un grand nombre de prises de courant avec lesquelles ses contacts électriques ne peuvent pas coopérer.

Une première possibilité pour résoudre ce problème serait d'utiliser un adaptateur comportant d'un côté des contacts électriques adaptés à coopérer avec la fiche électrique prévue sur le véhicule et de l'autre côté d'autres contacts électriques adaptés à coopérer avec les prises de courant d'un standard différent de celui utilisable avec la fiche électrique seule.

Cependant, cette solution, qui est utilisée dans d'autres domaines que celui du chargement des batteries de véhicule automobile, n'est pas satisfaisante car la connexion de la fiche électrique et de l'adaptateur n'est pas suffisamment sécurisée. Une telle association électrique pour le rechargement des batteries de véhicules électriques est en conséquence interdite dans de nombreux pays.

Le document US5,626,479 décrit un adaptateur d'interface de sortie pour un cordon de charge de véhicule électrique, utilisant comme moyen d'assemblage un système de clip.

Le document GB2312792 présente une fiche électrique sécurisée empêchant son débranchement sans clef spécifique.

Le document WO2005124943 décrit une fiche électrique branchée dans une prise de courant formée d'un boîtier et d'un adaptateur.

Le document EP0626737 décrit une fiche de raccordement en deux parties pour chargeur externe de véhicule électrique, permettant d'empêcher le contact électrique tant que la fiche n'est pas verrouillée dans la prise de courant batterie.

Le document GB2332103 présente une fiche de raccordement en trois parties pour du matériel informatique, permettant de changer la partie intermédiaire de la fiche lorsque celle-ci est dégradée du fait de son usage répété.

### OBJET DE L'INVENTION

Afin de remédier à l'inconvénient précité de l'état de la technique, la présente invention propose un nouveau type de fiche électrique modulable sécurisée.

Plus particulièrement, on propose selon l'invention une fiche électrique telle que décrite en introduction, comportant des moyens de verrouillage de l'assemblage des premier et deuxième éléments, distincts desdits moyens d'assemblage.

Ainsi, la fiche électrique comporte une partie interchangeable permettant de l'adapter à différents standards de prise de courant. En outre, la connexion électrique des deux éléments formant la fiche est sécurisée, dans le sens où cette connexion est verrouillée par lesdits moyens de verrouillage.
- Lesdits moyens de verrouillage sont désactivables uniquement lorsque la fiche n'est pas raccordée à ladite prise de courant ;
- lesdits moyens de verrouillage sont accessibles uniquement sur une face de raccordement du deuxième élément qui porte les contacts électriques de sortie de ladite fiche ;
- lesdits moyens de verrouillage sont désactivables uniquement grâce à une clé ;
- lesdits moyens de verrouillage sont des moyens mécaniques comportant un verrou mobile adapté à être logé dans ledit deuxième élément et un renfoncement ménagé dans ledit premier élément de la fiche avec lequel ledit verrou est adapté à coopérer à retenue lorsque les moyens de verrouillage sont activés ;
- il est prévu des moyens de blocage de connexion pour empêcher la connexion des contacts électriques de sortie de la fiche avec ladite prise électrique lorsque les moyens de verrouillage sont désactivés ;
- lesdits moyens de blocage de connexion comportent un moyen de rappel desdits moyens de verrouillage vers une position stable dans laquelle ils forment une saillie sur la face de raccordement dudit deuxième élément de la fiche lorsque ces moyens de verrouillage sont désactivés ;
- il est prévu non limitativement des moyens d'étanchéité entre lesdits premier et deuxième éléments.

L'invention concerne également un élément électrique comprenant, de manière distincte, d'une part, des contacts électriques intermédiaires adaptés à être raccordés à des premiers contacts électriques d'une fiche électrique d'un dispositif électrique, et, d'autre part, des contacts électriques de sortie destinés à être raccordés à des bornes électriques d'une prise de courant, et des moyens d'assemblage de cet élément électrique avec ladite fiche, cet élément électrique comportant des moyens de verrouillage de l'assemblage de cet élément électrique et de ladite fiche distincts desdits moyens d'assemblage, adaptés à coopérer avec des moyens de verrouillage complémentaires de ladite fiche.

Cet élément électrique peut être ainsi connecté de manière sécurisée à une fiche électrique pour permettre l'utilisation de cette fiche avec une prise de courant dont le standard est différent du standard des prises utilisables avec la fiche seule.
- Lesdits moyens de verrouillage sont désactivables uniquement lorsque l'élément électrique n'est pas raccordé à ladite prise de courant ;
- lesdits moyens de verrouillage sont accessibles uniquement sur une face de raccordement de cet élément qui porte les contacts électriques de sortie ;
- lesdits moyens de verrouillage sont désactivables uniquement grâce à une clé ;
- lesdits moyens de verrouillage sont des moyens mécaniques comportant un verrou mobile logé dans ledit élément et adapté à coopérer à retenue avec un renfoncement ménagé dans la fiche ;
- il comporte des moyens de blocage de connexion pour empêcher la connexion des contacts électriques de sortie de la fiche avec ladite prise électrique lorsque les moyens de verrouillage sont désactivés ;
- lesdits moyens de blocage de connexion comportent un moyen de rappel desdits moyens de verrouillage vers une position stable dans laquelle ils forment une saillie sur la face de raccordement dudit élément lorsque ces moyens de verrouillage sont désactivés ;
- il est prévu non limitativement des moyens d'étanchéité adaptés à rendre étanche le raccordement des contacts électriques intermédiaires de l'élément électrique et des premiers contacts électriques de la fiche électrique.

L'invention concerne également un set d'éléments électriques comprenant une pluralité d'éléments tels que décrits précédemment, au moins deux de ces éléments électriques comportant des contacts de sortie différents.

L'invention concerne enfin un véhicule automobile électrique comportant une batterie électrique reliée à un câble d'alimentation pour son rechargement, l'extrémité dudit câble comportant une fiche électrique telle que décrite précédemment. Plus précisément, elle concerne en particulier un véhicule automobile électrique comportant une batterie électrique reliée pour son rechargement à un chargeur de cette batterie, dans lequel le chargeur est relié à un câble d'alimentation dont l'extrémité comporte ladite fiche électrique.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique de la fiche de raccordement électrique selon l'invention,
- la figure 2 est une vue éclatée d'un premier mode de réalisation de la fiche électrique selon l'invention,
- la figure 3 est une vue assemblée du mode de réalisation de la fiche électrique de la figure 2, lorsque les moyens de verrouillage sont désactivés,
- la figure 4 est une vue similaire à celle de la figure 3, lorsque les moyens de verrouillage sont activés,
- la figure 5 est une vue en coupe de la fiche électrique de la figure 3,
- la figure 6 est une vue en coupe de la fiche électrique de la figure 4,
- la figure 7 est une vue en perspective d'un premier élément de la fiche des figures 2 à 6,
- la figure 8 est une vue arrière du premier élément de la figure 7,
- la figure 9 est une vue en perspective agrandie du premier élément de la figure 7,
- la figure 10 est une vue en perspective avant d'un deuxième élément de la fiche électrique des figures 2 à 6,
- la figure 11 est une vue en perspective arrière du deuxième élément de la figure 10,
- la figure 12 est une vue de dessous du deuxième élément de la figure 10,
- les figures 13 à 15 sont des vues en perspectives avant de différents modes de réalisation du deuxième élément de fiche de la figure 10 ,
- la figure 16 montre un exemple d'élément électrique ne faisant pas partie de l'invention.

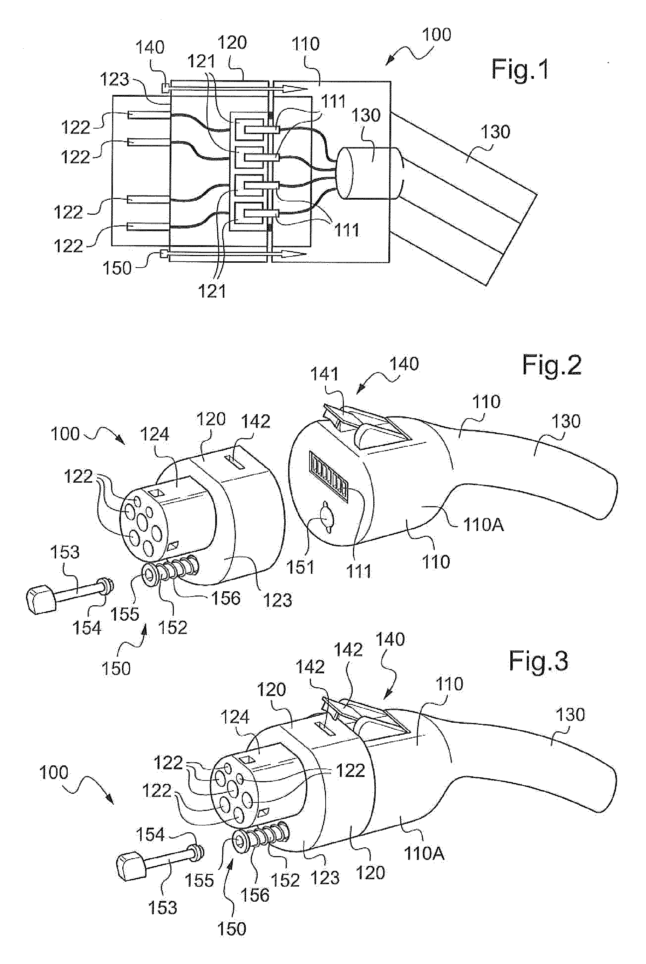

Sur la figure 1, on a représenté schématiquement une fiche de raccordement 100 selon l'invention.

Cette fiche de raccordement 100 électrique est destinée à être reliée à un dispositif électrique, par exemple à un chargeur de la batterie de traction d'un véhicule électrique ou hybride utilisé pour le rechargement électrique de cette batterie.

Elle comporte un premier élément 110 comprenant des premiers contacts électriques 111 et un deuxième élément 120 comprenant, de manière distincte, d'une part, des contacts électriques intermédiaires 121 adaptés à être raccordés auxdits premiers contacts électriques 111, et, d'autre part, des contacts électriques de sortie 122 destinés à être raccordés à des bornes électriques d'une prise de courant (non représentée).

Les premiers contacts électriques 111 du premier élément 110 sont adaptés à être connectés, d'une part, audit dispositif électrique à alimenter, et d'autre part audits contacts électriques intermédiaires du deuxième élément 120.

Ici, les premiers contacts électriques 111 du premier élément 110 sont connectés à un câble 130 électrique relié au dispositif électrique.

Les contacts électriques intermédiaires 121 du deuxième élément 120 sont adaptés à coopérer avec les premiers contacts électriques 111 du premier élément 110 afin de connecter électriquement le deuxième élément 120 et le premier élément 110.

Les contacts électriques intermédiaires 121 du deuxième élément 120 sont également connectés électriquement aux contacts de sortie 122 à l'intérieure du deuxième élément 120.

La fiche de raccordement 100 selon l'invention comprend également des moyens d'assemblage du premier et du deuxième élément 110, 120 l'un avec l'autre, représentés schématiquement par la flèche 140 sur la figure 1.

Ces moyens d'assemblage 140 sont par exemple des moyens d'emboîtement, des moyens de clipsage ou des moyens fonctionnant par coulissement ou par vissage. Tout moyen d'assemblage connu de l'homme du métier peut être envisagé.

De manière remarquable, la fiche de raccordement 100 comporte en outre des moyens de verrouillage 150 de l'assemblage des premier et deuxième éléments 110, 120, distincts desdits moyens d'assemblage 140 et représentés schématiquement sur la figure 1 par la flèche 150.

Ces moyens de verrouillage permettent de bloquer l'assemblage des premier et deuxième éléments et d'empêcher la séparation et donc la déconnexion électrique de ces deux éléments par des personnes non autorisées ou par une manoeuvre accidentelle.

Les moyens de verrouillage 150 peuvent être placés dans deux états : un état dans lequel ils sont désactivés et autorisent la séparation des deux éléments de la fiche de raccordement 100, et un état dans lequel ils sont activés et bloquent cette séparation.

De préférence, les premiers contacts électriques 111 du premier élément de la fiche de raccordement 110 ne sont pas adaptés à coopérer avec l'une quelconque des prises de courant existantes. Ainsi, les premiers contacts électriques 111 sont uniquement adaptés à coopérer avec les contacts électriques intermédiaires 121 du deuxième élément 120 de la fiche de raccordement 100.

Le premier élément 110 de la fiche de raccordement 100 est ainsi de préférence inutilisable seul comme fiche de raccordement électrique.

Un premier mode de réalisation possible de la fiche de raccordement selon l'invention est représenté sur les figures 2 à 12.

Les références de la figure 1 ont été conservées pour les éléments correspondant de ce mode de réalisation.

Comme représenté sur ces figures 2 à 12, la fiche de raccordement 100 comporte une partie médiane présentant globalement une forme cylindrique. Cette partie médiane comporte à l'une de ces extrémités longitudinales une face de raccordement 123 qui porte les contacts électriques de sortie 122 de la fiche 100. L'autre extrémité de cette partie médiane est reliée à une enveloppe du câble d'alimentation 130.

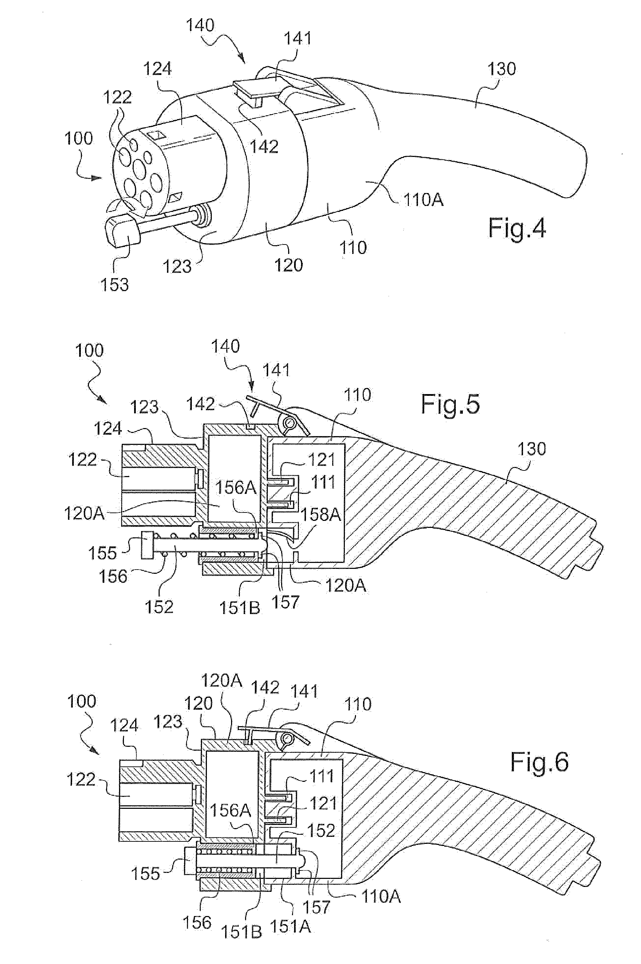

Ce premier élément 110 comporte un corps 110A creux globalement cylindrique représenté sur les figures 2 à 9. Ce corps 110A est ici prolongé d'un côté par l'enveloppe du câble d'alimentation (figures 5 et 6). Le premier élément 110 est ici formé d'une seule pièce avec l'enveloppe du câble d'alimentation 130.

Le câble d'alimentation 130 pénètre à l'intérieur du corps 110A du premier élément 110 pour être connecté électriquement aux premiers contacts électriques 111.

Ce raccordement électrique du câble 130 aux premiers contacts électriques 111 de ce premier élément 110 n'est pas représenté sur les figures 5 et 6.

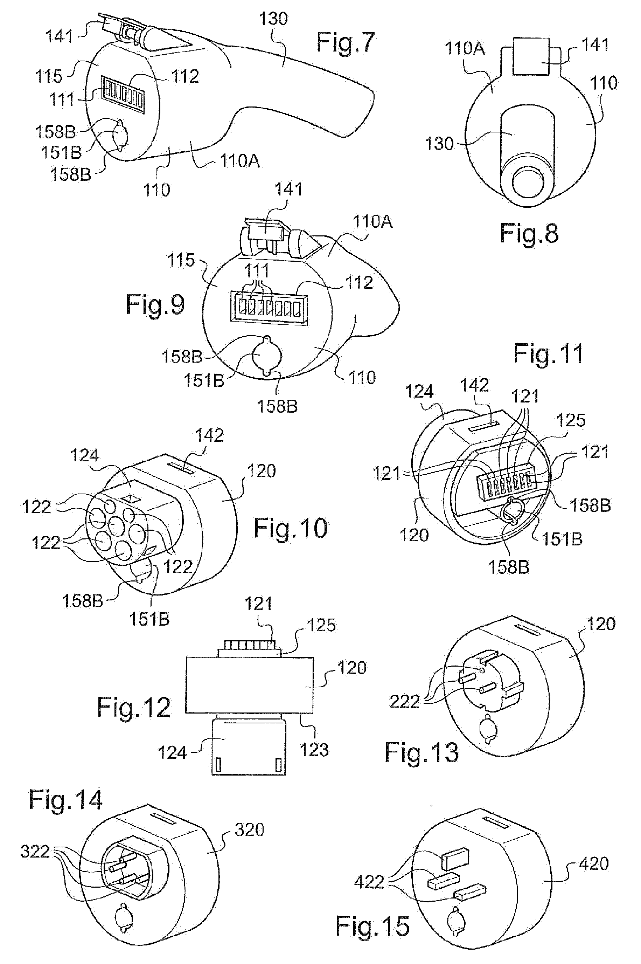

Les premiers contacts électriques 111 sont ici disposés sur une face de montage 115 du premier élément 110 opposée à l'entrée du câble d'alimentation 130, visible plus particulièrement sur les figures 7 et 9.

Les premiers contacts électriques 111 sont ici des contacts de types bornes femelles. Ils sont ainsi situés dans des renfoncements de la face de montage 115.

Une rainure 112 est prévue dans la face de montage 115 et entoure l'ensemble des premiers contacts électriques 111. Cette rainure 112 accueille une nervure 125 (figures 11 et 12) du deuxième élément 120 de la fiche 100.

L'emboîtement de la nervure 125 dans la rainure 112 contribue à l'assemblage des deux éléments de la fiche de raccordement. La rainure 125 et la rainure 112 font donc ici partie des moyens d'assemblage 140 de ces deux éléments l'un sur l'autre.

Le deuxième élément 120 comporte un corps 120A (figures 5 et 6) creux globalement cylindrique qui s'adapte aux dimensions du corps 110A du premier élément 110. L'une des faces longitudinales de ce corps 120A est destinée à être orientée vers la face de montage 115 du premier élément 110. Cette face est opposée à la face de raccordement 123 qui porte les contacts électriques de sortie 122 de la fiche 100. Elle porte les contacts électriques intermédiaires 121. Ces contacts électriques intermédiaires 121 sont ici du type mâle et sont adaptés à être enfichés dans les premiers contacts électriques 111 de type femelle du premier élément 110.

Les contacts électriques intermédiaires 121 sont entourés de la nervure 125 qui est adaptée à coopérer avec la rainure 112 de la face de montage 115 du premier élément 110.

Dans le mode de réalisation représenté sur les figures 2 à 12, les contacts électriques de sortie 122 sont conformes au standard appelé « type II » qui est adapté à coopérer avec les prises de courant disponibles dans le domaine public en Allemagne.

Ces contacts électriques de sortie 122 comprennent sept puits ménagés dans un bloc 124 faisant saillie de la face de raccordement 123 du deuxième élément 120.

En variante, les contacts électriques de sortie de la fiche peuvent présenter toutes les géométries susceptibles de convenir pour le raccordement de la fiche à une prise de courant d'un standard quelconque.

En particulier, on a représenté sur les figures 13 à 15, trois autres modes de réalisation des contacts électriques de sortie 222, 322, 422 pouvant être disposés sur la face de raccordement du deuxième élément 220, 320, 420 de la fiche de raccordement selon l'invention. La figure 13 montre les contacts électriques de sortie 222 d'un deuxième mode de réalisation de la fiche électrique adaptée à coopérer avec les prises de courant disponibles par exemple au domicile des utilisateurs, dans le domaine privé, en France et en Allemagne. La figure 14 montre les contacts électriques de sortie 322 d'un troisième mode de réalisation de la fiche électrique adaptée à coopérer avec les prises de courant disponibles par exemple dans le domaine public en Italie. Ce type de contacts électriques de sortie correspond au type - A. La figure 15 montre les contacts électriques de sortie 422 d'un quatrième mode de réalisation de la fiche électrique adaptée à coopérer avec les prises de courant disponibles par exemple au domicile des utilisateurs, dans le domaine privé, en Grande-Bretagne.

Hormis les différences de géométrie et de circuit électrique imposées par les différents standards aux contacts de sortie 222, 322, 422, le deuxième élément 220, 320, 420 correspondant à ces différents modes de réalisation est identique au deuxième élément 120 décrit précédemment et dans ce qui suit.

Comme représenté sur les figures 2 à 6, les moyens d'assemblage 140 des deux éléments 110, 120 de la fiche comportent ici également un clip 141 porté par le premier élément 110 et une fente 142 ménagée dans la paroi latérale du corps 120A du deuxième élément 120 avec laquelle le clip 141 est adapté à coopérer à retenue.

Le clip 141 est par exemple muni à son extrémité libre d'un crochet adapté à s'accrocher à un rebord de la fente 142. Le clip 141 est monté à pivotement sur la paroi latérale du corps 110A du premier élément 110.

Les moyens de verrouillage 150 de la fiche électrique 100 représentée sur les figures 2 à 6 sont par exemple des moyens mécaniques comportant un verrou mobile logé dans ledit deuxième élément 120 et un renfoncement ménagé dans ledit premier élément de la fiche avec lequel ledit verrou est adapté à coopérer à retenue lorsqu'il est activé.

Plus précisément, le verrou mobile se présente ici sous la forme d'une tige 152 (figures 2 à 6) cylindrique munie à l'une de ses extrémités de deux plots 157 diamétralement opposés (figures 5 et 6) et à l'autre extrémité d'une tête comportant une empreinte creuse 155.

Les moyens de verrouillage 150 comportent également deux logements : un premier logement 151 A ménagé dans le premier élément 110 de la fiche 100 et un deuxième logement 151 B ménagé dans le deuxième élément 120, de telle sorte que la tige 142 puisse être accueillie sur toute sa longueur dans les deux logements 151 A, 151 B mis bout à bout.

Le premier logement 151 A débouche sur la face de montage 110A du premier élément 110. Ce premier logement présente des dimensions adaptées à un jeu près aux dimensions latérales de la tige 142. Une rainure hélicoïdale 158A (figure 5) est prévue dans la face interne de ce premier logement 151A pour accueillir chaque plot 157 de la tige 152.

Le deuxième logement 151 B traverse le premier élément 110. Ce deuxième logement présente des dimensions adaptées à un jeu près aux dimensions latérales de la tige 142. Une rainure droite 158B (figures 7 et 9) est prévue dans la face interne de ce deuxième logement 151 B pour accueillir chaque plot 157 de la tige 152.

Ces moyens de verrouillage 150 fonctionnent comme un système de fixation à baïonnette : une fois les deux éléments de la fiche 100 assemblés grâce aux moyens d'assemblage 140, la tige 152 est introduite dans le deuxième logement 151 B. Les plots 157 coulissent dans les rainures droites 158B. La tige 152 est ensuite introduite dans le premier logement 151 A. Les plots 157 coulissent dans les rainures 158B hélicoïdales qui impriment un mouvement de rotation à la tige 152. Les plots 157 passent un point dur et sont bloqués dans le deuxième élément 120. Le mouvement de rotation correspond par exemple à un quart de tour.

A ce moment - là, la tige est entièrement enfoncée dans les logements 151 A, 151 B et seule sa tête est accessible sur la face de raccordement 123 du deuxième élément, comme représenté sur la figure 4.

Les moyens de verrouillage 150 sont alors dans leur état activé et l'assemblage des deux éléments de la fiche 100 est alors verrouillé.

Pour sortir la vis des deux logements de la fiche, et ainsi désactiver les moyens de verrouillage 150, il est nécessaire, d'une part, d'avoir accès à la tête de la tige 152, et d'autre part, de disposer d'une clé 153 (figures 2 à 4) dont l'extrémité est adaptée à coopérer avec l'empreinte creuse 155 de la tête de la tige 152.

La face de raccordement 123 de la fiche électrique 100 étant plaquée contre la prise de courant lorsque la fiche 100 est enfichée dans la prise, par exemple pendant le chargement de la batterie du véhicule, la tête de la tige 152 n'est pas accessible pendant la charge de cette batterie. Ainsi, les moyens de verrouillage 150 sont désactivables uniquement lorsque la fiche de raccordement 100 n'est pas raccordée à ladite prise de courant.

Ceci permet d'assurer une sécurité électrique renforcée de la fiche de raccordement 100 selon l'invention.

En effet, ceci assure que les deux éléments de la fiche de raccordement 100 ne peuvent être séparés lorsque la fiche est connectée à une prise de courant.

En outre, l'utilisation d'une clé spécifique garantit que les moyens de verrouillage 150 ne peuvent être désactivés que par la personne possédant la clé.

En outre, dans le cas de l'utilisation de la fiche de raccordement 100 pour la charge de la batterie d'un véhicule électrique, il est prévu de manière connue des moyens empêchant la déconnexion de la fiche de raccordement et de la prise électrique pendant la charge de la batterie. Ces moyens empêchant la déconnexion agissent ici sur le deuxième élément 120 de la fiche de raccordement 100. Il s'agit par exemple de doigts de blocage radians qui sont introduits dans des orifices complémentaires du bloc 124.

Les moyens empêchant la déconnexion doivent être désactivés par le conducteur à partir d'une unité de commande informatique reliée à la prise de courant.

La connexion du deuxième élément de la fiche de raccordement 100 dans la prise électrique est donc par ailleurs sécurisée.

Il faut donc d'une part désactiver les moyens empêchant la déconnexion de la fiche et, d'autre part, les moyens de verrouillage de la fiche 100 avant de pouvoir séparer les deux éléments électriques de la fiche 100.

De préférence, on utilise des moyens de verrouillage 150 tels que décrits ici, qui sont à la fois accessibles uniquement en face avant et désactivables uniquement grâce à une clé. En variante, on peut cependant envisager d'utiliser des moyens de verrouillage ne présentant que l'une de ces caractéristiques.

De préférence, il est également prévu des moyens de blocage de connexion pour empêcher la connexion des contacts électriques de sortie 122 de la fiche de raccordement 100 avec ladite prise électrique lorsque les moyens de verrouillage 150 sont désactivés.

Ici, ces moyens de blocage de la connexion se présentent sous la forme d'un moyen de rappel 156 desdits moyens de verrouillage 150 vers une position stable dans laquelle ils forment une saillie sur la face de raccordement 123 dudit deuxième élément 120 de la fiche 100 lorsque ces moyens de verrouillage sont désactivés.

La présence de cette saillie empêche l'utilisateur d'enficher la fiche électrique dans la prise de courant lorsque les moyens de verrouillage sont désactivés. Ceci assure que la fiche soit sécurisée lors de son utilisation.

Plus précisément, comme représenté sur les figures 5 et 6, ces moyens de blocage de la connexion comportent ici un ressort 156 enroulé autour de la tige 152 et venant en butée sur un élément de butée 156A interne au deuxième logement 151 B.

La tige 152 est alors partiellement logée en permanence dans le deuxième logement 151 B du deuxième élément 120 et est ainsi imperdable.

Ce ressort 156 présente une position stable en élongation (figure 5). La force de ce ressort 156 est telle que l'enfoncement de la tige 152 dans les logements 151 A, 151 B lorsque les moyens de verrouillage 150 sont désactivés est très difficile, voire impossible. On peut également prévoir que cette force soit telle que si la fiche avec les moyens de verrouillage désactivés est enfichée dans la prise de courant par l'utilisateur, cette fiche est éjectée hors de la prise lorsque l'utilisateur la relâche.

Ainsi, toute utilisation de la fiche de raccordement 100 selon l'invention lorsque les moyens de verrouillage 150 sont désactivés est interdite.

Il est en outre avantageusement prévu des moyens d'étanchéité entre lesdits premier et deuxième éléments.

Ces moyens d'étanchéité comportent ici un joint d'étanchéité disposé sur ledit deuxième élément 120, de manière à entourer lesdits contacts électriques intermédiaires 121.

Plus précisément, il s'agit ici d'un joint d'étanchéité en caoutchouc disposé sur la nervure 125 entourant les contacts électriques intermédiaires 121.

Ce joint d'étanchéité permet d'éviter l'infiltration d'eau ou de poussières pouvant dégrader la connexion électrique entre le premier et le deuxième élément ou provoquer un court-circuit.

Grâce à la fiche de raccordement 100 selon l'invention, le deuxième élément 120 portant les contacts électriques de sortie 122 peut être changé rapidement et facilement.

Il suffit pour cela de déconnecter la fiche 100 de la prise dans laquelle est enfichée, si tel est le cas, d'introduire la clé dans l'empreinte creuse 155 de la tête de la tige 152 et d'imprimer un mouvement de rotation adéquate à la tige 152.

Les plots 157 de la tige 152 repassent alors le point dur et coulissent dans les rainures 158A du premier logement. Les moyens de verrouillage 150 sont alors dans leur état désactivés.

Le deuxième élément 120 peut alors être séparé du premier en déclipsant le clip 141 et en désemboîtant la nervure 125 de la rainure complémentaire 112.

L'utilisateur assemble ensuite rapidement et facilement un deuxième élément électrique présentant des contacts électriques de sortie différents adapté à la prise qu'il souhaite utiliser.

Les moyens de blocage de la connexion évitent que l'utilisateur oublie d'activer les moyens de verrouillage 150.

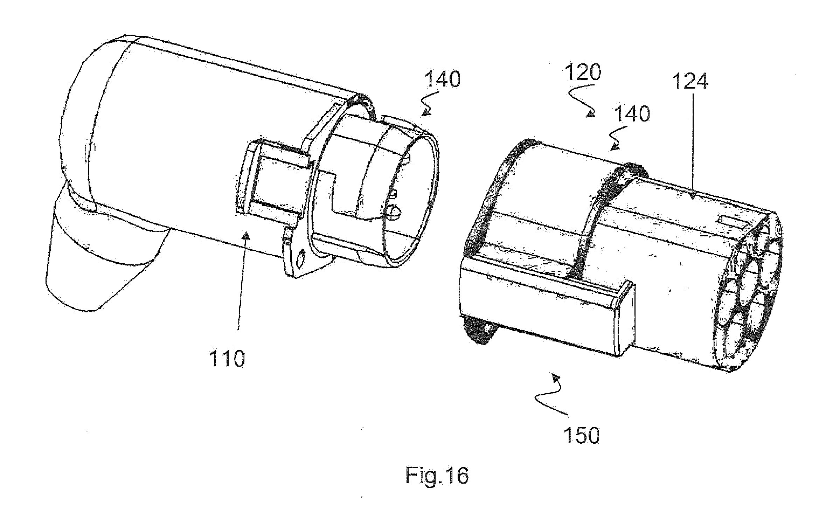

A titre d'exemple ne faisant pas partie de l'invention un autre élément électrique est représentée à la figure 16. Dans cet exemple, les moyens d'assemblage 140 comportent un anneau fixé en rotation sur le deuxième élément 120, apte à se visser sur un support complémentaire rigide fixé au premier élément 110. Ces moyens d'assemblage 140 forment un moyen de fixation quart de tour simple et peu coûteux, permettant d'assurer l'étanchéité de l'assemblage des premier et deuxième éléments 110 et 120. Les moyens de verrouillage 150 comportent un rail périphérique dont une première partie se trouve sur le premier élément 110 et une seconde partie sur l'anneau fixé en rotation sur le second élément 120, ainsi qu'un coulisseau monté sur le rail périphérique sur l'anneau et venant bloquer la rotation de l'anneau lorsqu'il est introduit dans la partie du rail se trouvant sur le premier élément 110. Ces moyens de verrouillage comportent également, entre le rail et le coulisseau, un moyen de rappel bloquant le coulisseau dans une position empêchant l'introduction du module 124 dans une prise, lorsque le coulisseau n'est pas introduit dans la partie du rail se trouvant sur le premier élément 110. Lorsque le coulisseau est introduit dans la partie du rail se trouvant sur le premier élément 110, un crochet bloque ce moyen de rappel, permettant le branchement du bloc 124 dans une prise.

Ce moyen de verrouillage présente encore l'avantage d'être simple et peu coûteux à mettre en oeuvre.

L'utilisateur peut ainsi disposer dans son véhicule d'un set de deuxièmes éléments 120 présentant différents contacts électriques de sortie et choisir le deuxième élément à assembler avec le premier élément selon le standard de la prise de courant disponible pour le chargement du véhicule.

Ce set est avantageusement peu encombrant.

L'utilisateur peut ainsi recharger son véhicule avec différents types de prises de courant, en toute sécurité.

## Revendications

1. Elément électrique (120) d'une fiche de raccordement électrique modulable (100) d'un véhicule électrique ou hybride comprenant, de manière distincte, d'une part, des contacts électriques intermédiaires (121) adaptés à être raccordés à des premiers contacts électriques (111) d'un autre élément (110) de ladite fiche électrique, et, d'autre part, des contacts électriques de sortie (122) destinés à être raccordés à des bornes électriques d'une prise de courant, et des moyens d'assemblage (125, 142) dudit élément électrique (120) avec ledit autre élément (110) de ladite fiche,ledit élément électrique (120) comportant des moyens de verrouillage (152, 151 B) de l'assemblage dudit élément électrique (120) et dudit autre élément de ladite fiche distincts desdits moyens d'assemblage (125, 142), adaptés à coopérer avec des moyens de verrouillage (151 A) complémentaires dudit autre élément de ladite fiche, et lesdits moyens de verrouillage (150) sont désactivables uniquement grâce à une clé (153) et uniquement lorsque l'élément électrique (120) n'est pas raccordé à ladite prise de courant,
lesdits moyens de verrouillage (152, 151 B) étant accessibles uniquement sur une face de raccordement (123) de cet élément électrique (120) qui porte les contacts électriques de sortie (122), lesdits moyens de verrouillage (150) étant des moyens mécaniques comportant un verrou mobile adapté à être partiellement logé dans ledit élément électrique (120) et adapté à coopérer à retenue avec un renfoncement (151 B) ménagé dans ledit autre élément de ladite fiche,
ledit élément électrique étant **caractérisé en ce que** le verrou mobile est une tige (152) cylindrique munie à l'une de ses extrémités de deux plots (157) diamétralement opposés et **en ce que** ledit élément électrique comprend des moyens de blocage de connexion (156) pour empêcher la connexion des contacts électriques de sortie (122) de la fiche (100) avec ladite prise électrique lorsque les moyens de verrouillage (150) sont désactivés, lesdits moyens de blocage de connexion (156) comportant un moyen de rappel desdits moyens de verrouillage (150) vers une position stable dans laquelle lesdits moyens de verrouillage (150) forment une saillie sur la face de raccordement (123) dudit élément lorsque ces moyens de verrouillage (150) sont désactivés, la force du moyen de rappel étant telle que si la fiche avec les moyens de verrouillage désactivés est enfichée dans la prise de courant par l'utilisateur, cette fiche est éjectée hors de la prise lorsque l'utilisateur la relâche.

2. Elément électrique selon la revendication 1, dans lequel il est prévu des moyens d'étanchéité adaptés à rendre étanche le raccordement des contacts électriques intermédiaires (121) de l'élément électrique (120) et des premiers contacts électriques (111) dudit autre élément de la fiche électrique.

3. Set d'éléments électriques comprenant une pluralité d'éléments électriques selon l'une des revendications 1 à 2, au moins deux de ces éléments électriques comportant des contacts de sortie différents.

4. Fiche (100) de raccordement électrique modulable, destinée à être reliée à un véhicule électrique ou hybride, comportant :
- un premier élément (110) comprenant des premiers contacts électriques (111),
- un deuxième élément selon l'une quelconque des revendications 1 à 2.

5. Fiche (100) de raccordement électrique modulable selon les revendications 4 et 2, dans laquelle lesdits moyens d'étanchéité comportent un joint d'étanchéité disposé sur ledit deuxième élément (120), de manière à entourer lesdits contacts électriques intermédiaires (121).

6. Véhicule automobile électrique comportant une batterie électrique reliée à un câble d'alimentation pour son rechargement, l'extrémité dudit câble comportant une fiche électrique conforme à l'une des revendications 4 à 5.

## Patentansprüche

1. Elektrisches Element (120) eines modulierbaren elektrischen Anschlusssteckers (100) eines Elektro- oder Hybridfahrzeugs, das getrennt einerseits elektrische Zwischenkontakte (121), die geeignet sind, um an erste elektrische Kontakte (111) eines anderen Elements (110) des Elektrosteckers angeschlossen zu werden, und andererseits elektrische Ausgangskontakte (122), die dazu bestimmt sind, an elektrische Anschlüsse einer Steckdose angeschlossen zu werden, und zusammenbauelemente (125, 142) des elektrischen Elements (120) mit dem anderen Element (110) des Steckers enthält, wobei das elektrische Element (120) Verriegelungseinrichtungen (152, 151B) des zusammenbaus des elektrischen Elements (120) und des anderen Elements des Steckers enthält, die sich von den Zusammenbaueinrichtungen (125, 142) unterscheiden und geeignet sind, mit komplementären Verriegelungseinrichtungen (151A) des anderen Elements des Steckers zusammenzuwirken, und die Verriegelungseinrichtungen nur mit Hilfe eines Schlüssels (153) und nur dann deaktivierbar sind, wenn das elektrische Element (120) nicht an die Steckdose angeschlossen ist, wobei die Verriegelungseinrichtungen (152, 151B) nur auf einer Anschlussseite (123) dieses elektrischen Elements (120) zugänglich sind, die die elektrischen Ausgangskontakte (122) trägt, wobei die Verriegelungseinrichtungen (150) mechanische Einrichtungen sind, die einen beweglichen Riegel aufweisen, der geeignet ist, teilweise im elektrischen Element (120) untergebracht zu werden, und geeignet ist, mit Rückhalt mit einer Vertiefung (151B) zusammenzuwirken, die in dem anderen Element des Steckers ausgespart ist,
wobei das elektrische Element **dadurch gekennzeichnet ist, dass** der bewegliche Riegel eine zylindrische Stange (152) ist, die an einem ihrer Enden mit zwei diametral entgegengesetzten Klötzchen (157) versehen ist, und dass das elektrische Element Verbindungssperreinrichtungen (156) enthält, um die Verbindung der elektrischen Ausgangskontakte (122) des Steckers (100) mit der Steckdose zu verhindern, wenn die Verriegelungseinrichtungen (150) deaktiviert sind, wobei die Verbindungssperreinrichtungen (156) eine Rückstelleinrichtung der Verriegelungseinrichtungen (150) in eine stabile Stellung aufweisen, in der die Verriegelungseinrichtungen (150) einen Vorsprung auf der Anschlussseite (123) des Elements bilden, wenn diese Verriegelungseinrichtungen (150) deaktiviert sind, wobei die Kraft der Rückstelleinrichtung so ist, dass, wenn der Stecker mit den deaktivierten Verriegelungseinrichtungen vom Benutzer in die Steckdose eingesteckt wird, dieser Stecker aus der Steckdose ausgestoßen wird, wenn der Benutzer ihn loslässt.

2. Elektrisches Element nach Anspruch 1, wobei Dichteinrichtungen vorgesehen sind, die geeignet sind, um die Verbindung der elektrischen Zwischenkontakte (121) des elektrischen Elements (120) und der ersten elektrischen Kontakte (111) des anderen Elements des elektrischen Steckers abzudichten.

3. Satz z elektrischer Elemente, der eine Vielzahl von elektrischen Elementen nach einem der Ansprüche 1 bis 2 enthält, wobei mindestens zwei dieser elektrischen Elemente unterschiedliche Ausgangskontakte aufweisen.

4. Modulierbarer elektrischer Anschlussstecker (100), der dazu bestimmt ist, mit einem Elektro- oder Hybridfahrzeug verbunden zu werden, der aufweist:
- ein erstes Element (110), das erste elektrische Kontakte (111) enthält,
- ein zweites Element nach einem der Ansprüche 1 bis 2.

5. Modulierbarer elektrischer Anschlussstecker (100) nach den Ansprüchen 4 und 2, wobei die Dichteinrichtungen eine Dichtung aufweisen, die auf dem zweiten Element (120) so angeordnet ist, dass sie die elektrischen Zwischenkontakte (121) umgibt.

6. Elektrokraftfahrzeug, das eine elektrische Batterie aufweist, die mit einem Versorgungskabel für ihr Aufladen verbunden ist, wobei das Ende des Kabels einen elektrischen Stecker nach einem der Ansprüche 4 bis 5 aufweist.

## Claims

1. Electric element (120) of a modular electric connector plug (100) of a hybrid or electric vehicle including, separately, firstly, intermediate electric contacts (121) adapted to be connected to first electric contacts (111) of another element (110) of said electric plug and, secondly, output electric contacts (122) intended to be connected to electric terminals of a socket outlet, and means (125, 142) for assembling said electric element (120) with said other element (110) of said plug, said electric element (120) including means (152, 151B) separate from said assembly means (125, 142) for locking the assembly of said electric element (120) and said other element of said plug adapted to cooperate with complementary locking means (151A) of said other element of said plug, and wherein said locking means (150) can be deactivated only by a key (153) and only when the electric element (120) is not connected to said socket outlet, said locking means (152, 151B) being accessible only on a connecting face (123) of said electric element (120) that carries the output electric contacts (122), said locking means (150) being mechanical means including a movable catch adapted to fit partly in said electric element (120) and adapted to cooperate with a recess (151B) in said other element of said plug, said electric element being **characterized in that** the movable catch is a cylindrical rod (152) provided at one of its ends with two diametrically opposed studs (157) and **in that** said electric element includes connection blocking means (156) to prevent the connection of the output electric contacts (122) of the plug (100) with said socket outlet when the locking means (150) are deactivated, said connection blocking means (156) including means for urging said locking means (150) toward a stable position wherein said locking means (150) form a projection on the connecting face (123) of said element when said locking means (150) are deactivated, the force exerted by the urging means being such that if the plug is plugged into the socket outlet by the user with the locking means deactivated, this plug is ejected from the socket outlet when the user releases it.

2. Electric element according to Claim 1, in which sealing means are provided that are adapted to seal the connection of the intermediate electric contacts (121) of the electric element (120) and the first electric contacts (111) of said other element of the electric plug.

3. Set of electric elements including a plurality of electric elements according to either one of Claims 1 or 2, at least two of these electric elements including different output contacts.

4. Modular electric connector plug (100) intended to be connected to an electric or hybrid vehicle, including:
- a first element (110) including first electric contacts (111),
- a second element according to either one of Claims 1 or 2.

5. Modular electric connector plug (100) according to Claims 4 and 2, wherein said sealing means include a seal disposed on said second element (120) so as to surround said intermediate electric contacts (121).

6. Electric motor vehicle including an electric battery connected to a power cable for charging it, the end of said cable including an electric plug according to either one of Claims 4 or 5.
